# EUROPEAN PATENT APPLICATION

(11) **EP 4 802 881 A1**
(43) Date of publication of application: **09.09.2026**
(21) Application number: 26151331.1
(22) Date of filing: 12.01.2026
(51) Int. Cl.: A01G 17/08, A01G 9/12

(54) **CLIP DEVICE**

(30) Priority: 05.03.2025 TW 114108209
(71) Applicant: CENZ Automation Co. Ltd., New Taipei City 235 (TW)
(72) Inventor: TRAN, Chi-Cuong, 116059 Taipei City (TW); LIN, Chyi-Yeu, 111 Taipei City (TW); LIN, Chang-Hao, 116059 Taipei City (TW); LIN, Yu-Chiuan, 220052 New Taipei City (TW)
(74) Representative: Wagner & Geyer

(57) **Abstract**

A clip device (100) includes a feeding mechanism comprising a pusher (112) and a guide structure (114) adjacent thereto, a clip (120) at the guide structure and including a receiving portion (122) and arm portions (124) connected thereto, and a switch (130) coupled to the pusher and driving the pusher to push the clip forward along the guide structure. An opening portion (124a) is formed between the arm portions. When the clip moves forward along the guide structure, the arm portions are stretched open via the guide structure and a flower stem (50) is positioned in the opening portion. When the clip moves further forward and is released by the guide structure, the arm portions pass over the flower stem and clamp a support stick (60) in the opening portion, so the support stick and the receiving portion form a closed receiving area (R) receiving the flower stem. A diameter of the closed receiving area (R) is greater than that of the support stick.

## Description

### BACKGROUND OF THE INVENTION

### Field of the Invention

The invention relates to a clip device, and in particular to a clip device capable of applying a special clip for confining a flower stem in a containing space.

### Description of Related Art

Ornamental orchids are very popular indoor plants due to their often beautiful flowers, which come in a wide variety. These orchids not only may beautify a space but may also create an elegant atmosphere. To help orchids grow in a preferred extension direction, a support stick may be inserted into the orchid pot and the flower stem of the orchid may be secured to the support stick using a clip or other similar components, and it is best to provide a containing space where the flower stem may still be moved to facilitate further growth. This process of securing the flower stem to the support stick is usually done manually by the operator. Currently, the most widely used clips in the industry include three types. The first type is to use a plastic-coated metal wire segment to wrap around the flower stem and the support stick. The drawback is that the flower stem is bound to the support stick, making it difficult for the flower stem to move and limiting the growing space thereof. The second type is to use a clip similar to a shark hair clamp to clamp the flower stem and the support stick together. The drawback is when clamped too tight, the flower stem is bound to the support stick, making it difficult for the flower stem to move. When not clamped tight enough, the clip slides on the support stick and may not be fixed. The third method is to use an S-shaped clip. The smaller groove at one end of the S-shaped clip needs to be fixed on the support stick, and the greater groove at the other end is used to push the flower stem into the groove thereof to be accommodated. The drawback is that the operation is complicated, labor-intensive, and time-consuming.

### SUMMARY OF THE INVENTION

The invention provides a clip device that may conveniently and efficiently clamp a clip at a support stick and simultaneously the clip provides a space receiving a flower stem.

A clip device of the invention includes a feeding mechanism, a clip, and a switch. The feeding mechanism includes a pusher and a guide structure, and the guide structure is adjacent to the pusher. The clip is configured to be disposed at the guide structure and includes a receiving portion and two arm portions, the two arm portions are connected to the receiving portion, and an opening portion is formed between the two arm portions. The switch is coupled to the pusher and configured to be activated to drive the pusher to push the clip to move forward along the guide structure. When the clip moves forward along the guide structure, the two arm portions are stretched open via a guidance of the guide structure and a flower stem is located in the opening portion. Then, when the clip moves further forward and is released by the guide structure, the two arm portions pass over the flower stem and clamp a support stick in the opening portion, so that the support stick and the receiving portion form a closed receiving area receiving the flower stem, and a diameter of the closed receiving area is greater than a diameter of the support stick.

In an embodiment of the invention, the guide structure has two guide grooves, and a distance between the two guide grooves of a front end portion of the guide structure is greater than a distance between the two guide grooves of other portions of the guide structure. The clip further includes two pin portions. The two pin portions are respectively connected to the two arm portions and configured to be extended into the two guide grooves respectively. When the clip moves forward to the front end portion along the guide structure, the two arm portions are stretched open via a guidance of the two guide grooves on the two pin portions.

In an embodiment of the invention, each time the switch is activated, the switch drives the pusher to push the clip to move forward by a predetermined stroke, and a length of the predetermined stroke is equal to a length of the clip.

In an embodiment of the invention, the clip device includes a plurality of the clip, wherein the clips are configured to be disposed in sequence along the guide structure, and the pusher is configured to push the clip farthest from the front end portion to drive the clips to move forward together.

In an embodiment of the invention, the clip device further includes a storage tank, wherein the storage tank is connected to the feeding mechanism and configured to store a plurality of the clip, and the storage tank is configured to sequentially feed the clips into the feeding mechanism.

In an embodiment of the invention, the storage tank includes a storage tank body and a storage module. The storage module is replaceably mounted at the storage tank body and configured to store the clips. When the clips in the storage module are depleted, the storage module may be removed and another storage module may be mounted at the storage tank body.

In an embodiment of the invention, the storage tank is configured to be connected to an external clip supply device, the clip supply device is configured to receive the storage module from the storage tank body, and the clip supply device is configured to provide another storage module to the storage tank body.

In an embodiment of the invention, the clip device further includes a handle, wherein the handle is connected to the feeding mechanism, and the switch is disposed at the handle.

In an embodiment of the invention, the handle is configured to be connected to a robotic arm, and the robotic arm is configured to activate the switch.

Based on the above, the clip device of the invention uses the pusher to push the clip to move forward along the guide structure and uses the guide structure to stretch the clip open, so that the clip may pass over the flower stem and then clamp the support stick via the opening portion thereof. Moreover, when the clip clamps the support stick, the flower stem is received via the closed receiving area thereof at the same time. Accordingly, the flower stem is restricted to be adjacent to the support stick at the clip, so that the flower stem may grow in a preferred extension direction. Since the clip device of the invention may automatically make the clip clamp the support stick and receive the flower stem as described above simply by activating the switch, the clip device of the invention is more convenient and efficient than traditional manual operation.

### BRIEF DESCRIPTION OF THE DRAWINGS

FIG. 1 is a partial top view of a clip device of an embodiment of the invention.
FIG. 2 is a schematic diagram of some members of the clip device of FIG. 1.
FIG. 3A and FIG. 3B illustrate the pusher of FIG. 1 pushing the clip forward.
FIG. 4 and FIG. 5 are three-dimensional views of the clip of FIG. 1 from different viewing angles.
FIG. 6 is a three-dimensional view of a clip device of another embodiment of the invention.
FIG. 7 is a partial three-dimensional view of some members of the clip device of FIG. 6.
FIG. 8 illustrates the storage module of FIG. 7 being taken out.
FIG. 9 is a schematic diagram of the storage tank of FIG. 6 connected to an external clip supply device.
FIG. 10 is a schematic diagram of the handle of FIG. 6 connected to a robotic arm.

### DESCRIPTION OF THE EMBODIMENTS

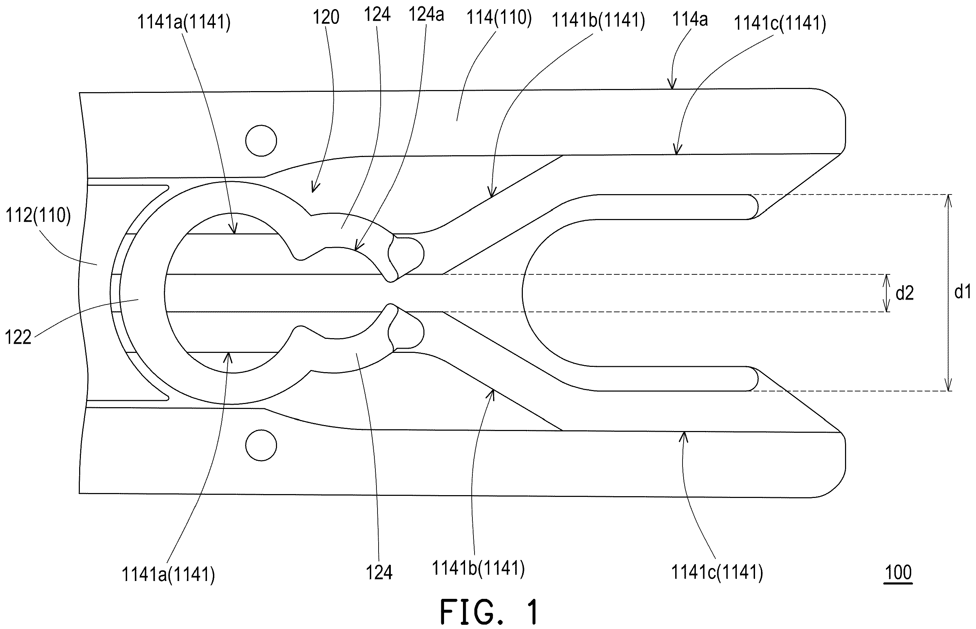

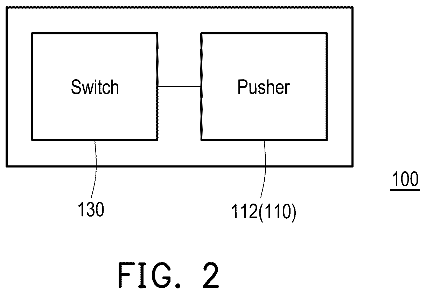

FIG. 1 is a partial top view of a clip device of an embodiment of the invention. FIG. 2 is a schematic diagram of some members of the clip device of FIG. 1. Referring to FIG. 1 and FIG. 2, a clip device 100 of the present embodiment includes a feeding mechanism 110, a clip 120, and a switch 130. The feeding mechanism 110 includes a pusher 112 and a guide structure 114. The guide structure 114 is adjacent to the pusher 112. The clip 120 is configured to be disposed at the guide structure 114 and includes a receiving portion 122 and two arm portions 124. The two arm portions 124 are, for example, arc-shaped and connected to the receiving portion 122, and an opening portion 124a is formed between the two arm portions 124. The switch 130 is coupled to the pusher 112 and configured to be activated by manual, pneumatic, electric, or other appropriate means to drive the pusher 112 to push the clip 120 to move forward along the guide structure 114. In the present embodiment, the clip device 100 is provided with a propulsion cylinder, for example, and the switch 130 is configured to drive the pusher 112 to operate via the propulsion cylinder.

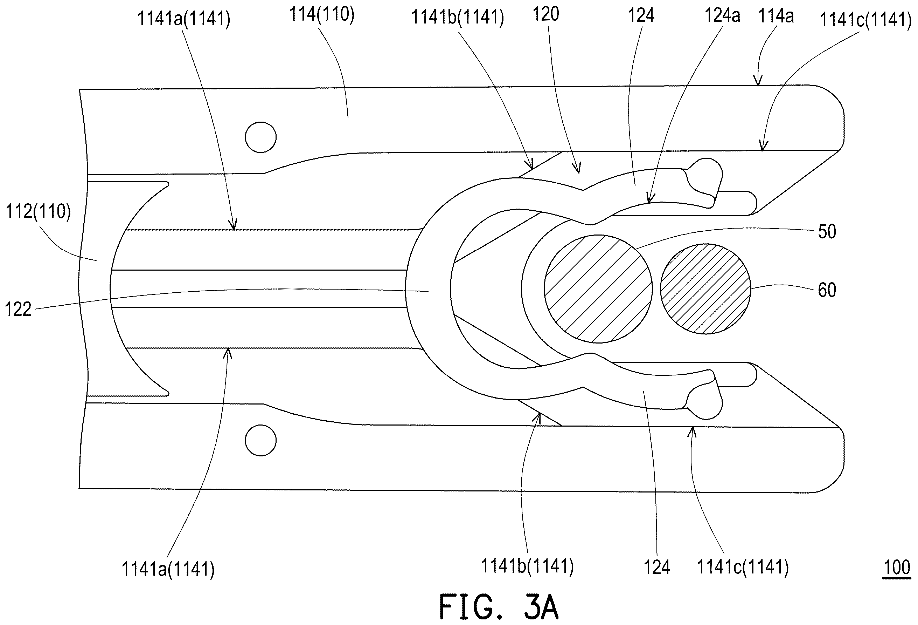

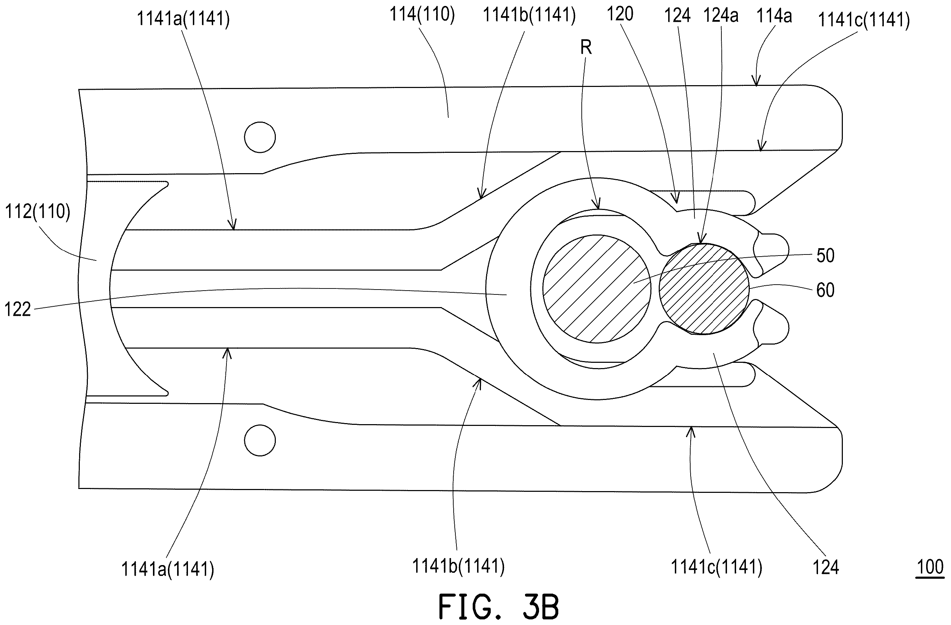

FIG. 3A and FIG. 3B illustrate the pusher of FIG. 1 pushing the clip to move forward. When the pusher 112 pushes the clip 120 to move forward along the guide structure 114 as shown in FIG. 3A, the two arm portions 124 of the clip 120 are stretched open via the guidance of the guide structure 114, so that a flower stem 50 is located in the opening portion 124a formed by the two arm portions 124. Next, when the pusher 112 pushes the clip 120 to move further forward and the clip 120 is released by the guide structure 114 as shown in FIG. 3B, the two arm portions 124 pass over the flower stem 50 and clamp a support stick 60 in the opening portion 124a, so that the support stick 60 and the receiving portion 122 form a closed receiving area R receiving the flower stem 50.

As described above, the clip device 100 of the present embodiment uses the pusher 112 to push the clip 120 to move forward along the guide structure 114 and uses the guide structure 114 to stretch the clip 120 open, so that the clip 120 may pass over the flower stem 50 and then clamp the support stick 60 via the opening portion 124a thereof. Moreover, when the clip 120 clamps the support stick 60, the flower stem 50 is received via the closed receiving area R thereof at the same time. Accordingly, the flower stem 50 is restricted to be adjacent to the support stick 60 at the clip 120, so that the flower stem 50 may grow in a preferred extension direction. Since the clip device 100 of the present embodiment may automatically make the clip 120 clamp the support stick 60 and receive the flower stem 50 as described above simply by activating the switch 130, the clip device 100 of the present embodiment is more convenient and efficient than traditional manual operation.

In the present embodiment, the closed receiving area R is, for example, an annular closed area, and the diameter of the closed receiving area R is, for example, greater than the diameter of the support stick 60. Accordingly, the closed receiving area R provides sufficient space to receive the flower stem 50, so that the flower stem 50 may grow and move smoothly.

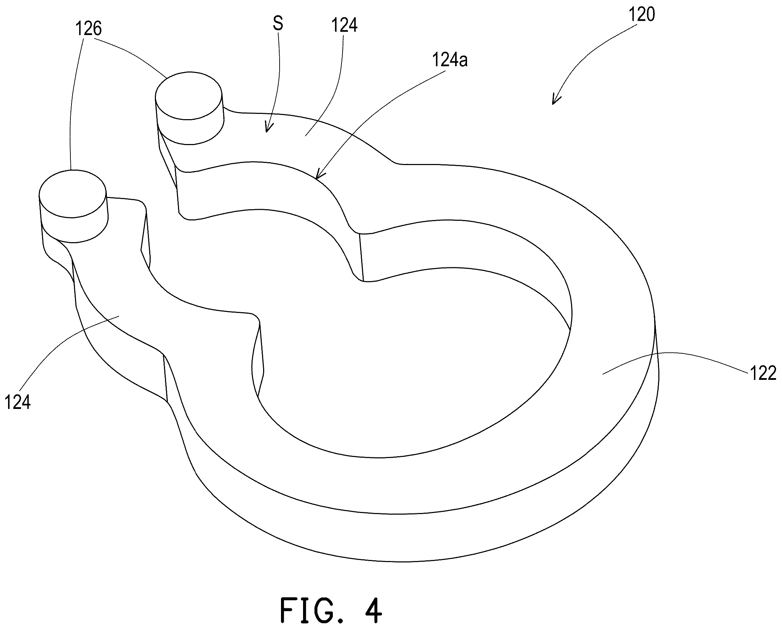

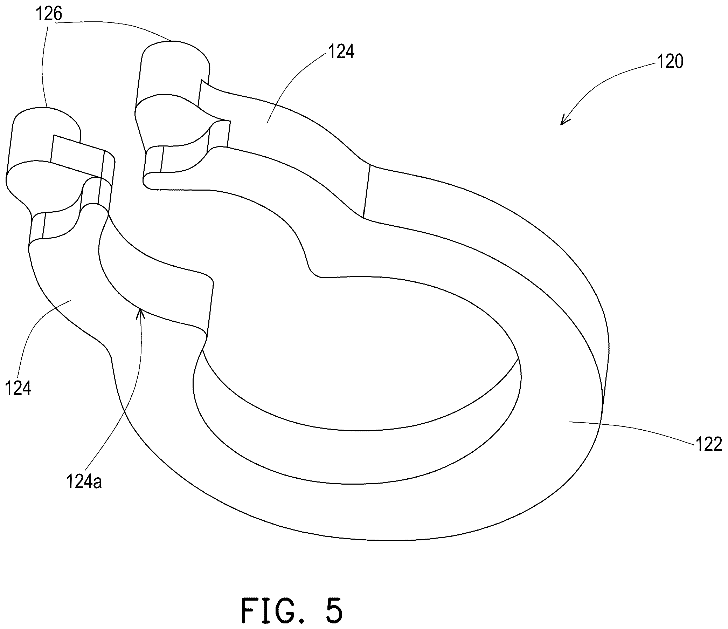

FIG. 4 and FIG. 5 are three-dimensional views of the clip of FIG. 1 from different perspectives. Specifically, the clip 120 of the present embodiment, as shown in FIG. 4 and FIG. 5, further includes two pin portions 126. The pin portions 126 are respectively connected to the two arm portions 124 and protruded in a direction perpendicular to an extension plane S of the clip 120. As shown in FIG. 1, the guide structure 114 has two guide grooves 1141. Each of the guide structures 114 includes a first section 1141a, a second section 1141b, and a third section 1141c. Two first sections 1141a are parallel to each other. One end of two second sections 1141b is respectively connected to the two first sections 1141a, and the distance between the two second sections 1141b is gradually increased along the forward direction of the clip 120. Two third sections 1141c are respectively connected to the other end of the two second sections 1141b, so that a distance d1 between the two guide grooves 1141 of a front end portion 114a of the guide structure 114 (the distance between the two third sections 1141c) is greater than a distance d2 between the two guide grooves 1141 of the other portions of the guide structure 114 (the distance between the two first sections 1141a and the distance between the two second sections 1141b). The two pin portions 126 of the clip 120 are configured to be respectively extended into the two guide grooves 1141. Accordingly, when the clip 120 moves forward to the front end portion 114a along the guide structure 114 as shown in FIG. 3B, the two arm portions 124 of the clip 120 are stretched open via the guidance of the two guide grooves 1141 on the two pins 126, and may pass over the flower stem 50 as described above.

In the present embodiment, each time the switch 130 is activated, the switch 130 drives the pusher 112 to push the clip 120 to move forward by a predetermined stroke. The length of the predetermined stroke is, for example, equal to the length of one clip 120. However, the invention is not limited thereto, and the predetermined stroke length of the pusher 112 pushing the clip 120 may be slightly increased or decreased according to operational requirements.

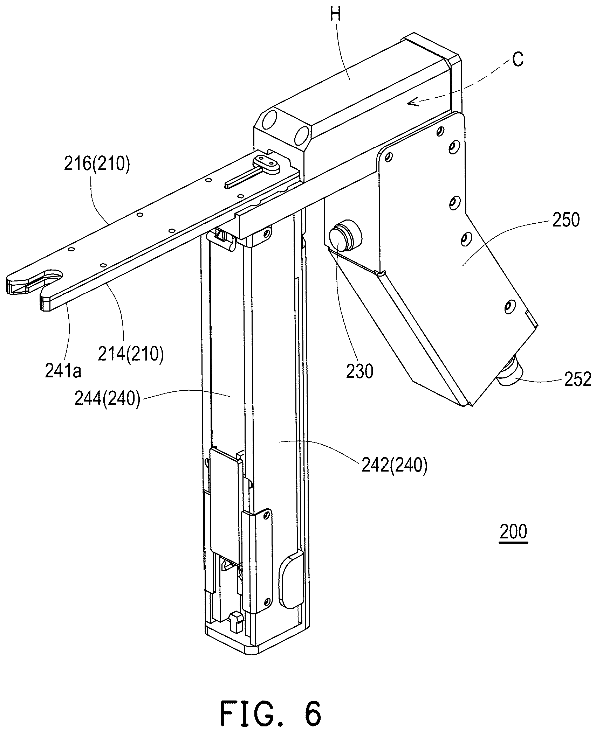

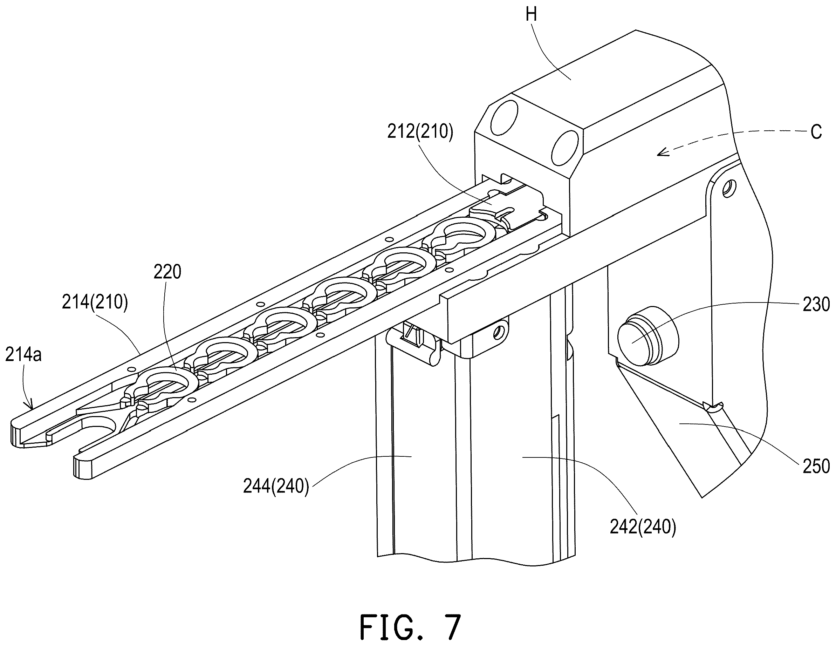

FIG. 6 is a three-dimensional view of a clip device of another embodiment of the invention. FIG. 7 is a partial three-dimensional view of some members of the clip device of FIG. 6. In a clip device 200 shown in FIG. 6 and FIG. 7, the configuration and the operation of the feeding mechanism 210, the pusher 212, the guide structure 214, a clip 220, and the switch 230 are the same as or similar to the configuration and the operation of the feeding mechanism 110, the pusher 112, the guide structure 114, the clip 120, and the switch 130 of FIG. 1 to FIG. 5, and are not further described here. The difference between the clip device 200 and the clip device 100 is that the clip device 200 includes a plurality of the clip 220, and the clips 220 are disposed sequentially along the guide structure 214. The pusher 212 is configured to be driven via a cylinder C mounted in a protective cover H to push the clip 220 farthest from a front end portion 214a of the guide structure 214 to drive all the clips 220 to move forward together. In addition, the feeding mechanism 210 includes a cover body 216. The cover body 216 is mounted on the guiding structure 214 to cover the clips 220 to prevent the clips 220 from separating upward from the guiding structure 214.

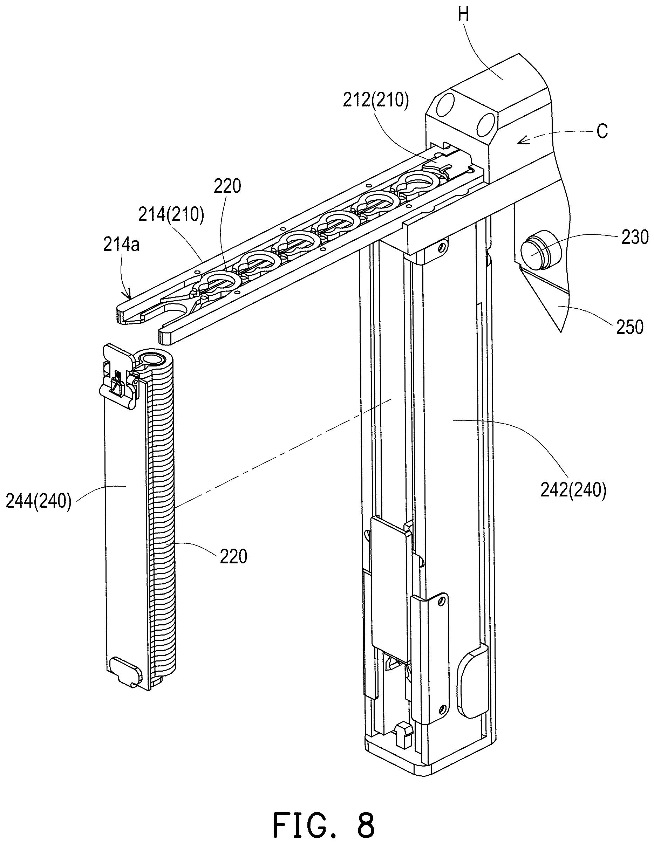

FIG. 8 illustrates the storage module of FIG. 7 being removed. As shown in FIG. 6 to FIG. 8, the clip device 200 of the present embodiment further includes a storage tank 240. The storage tank 240 is vertically connected to the feeding mechanism 210 and includes a storage tank body 242 and a storage module 244. The storage module 244 is replaceably mounted at the storage tank body 242 and configured to store a plurality of the clip 220. The clips 220 are stacked in the storage module 244 in an up- and-down direction, and the clips 220 may be slidably mounted at a corresponding structure of the storage module 244, for example, by means of the opening portion and/or the receiving portion thereof, without falling off the storage module 244. The storage tank 240 is configured to sequentially feed the clips 220 upward into the feeding mechanism 210, so that the supply of the clips 220 is continuous and uninterrupted. In the present embodiment, for example, the clips 220 in the storage module 244 are pushed upward by the elastic force provided by a spring or other type of elastic member disposed in the storage tank body 242, so that the topmost clip 220 enters the feeding mechanism 210. In other embodiments, the clips 220 in the storage module 244 may be fed into the feeding mechanism 210 via other suitable conveying mechanisms, and the invention is not limited in this regard. When the clips 220 in the storage module 244 are depleted, the storage module 244 may be removed and another storage module 244 filled with the clips 220 may be mounted at the storage tank body 242.

In the present embodiment, the clip device 200 further includes a handle 250. The handle 250 is connected to the feeding mechanism 210, and the switch 230 is disposed on the handle 250. Thus, the user may grasp the handle 250 to facilitate moving the front end portion 214a of the feeding mechanism 210 of the clip device 200 adjacent to the flower stem, and to facilitate pressing the switch 230 with the hand holding the handle 250. As shown in FIG. 6, the rear end of the handle 250 is provided with a connecting portion 252. The connecting portion 252 is connected to the cylinder C via the interior of the handle 250 and configured to connect to the power source of the cylinder C.

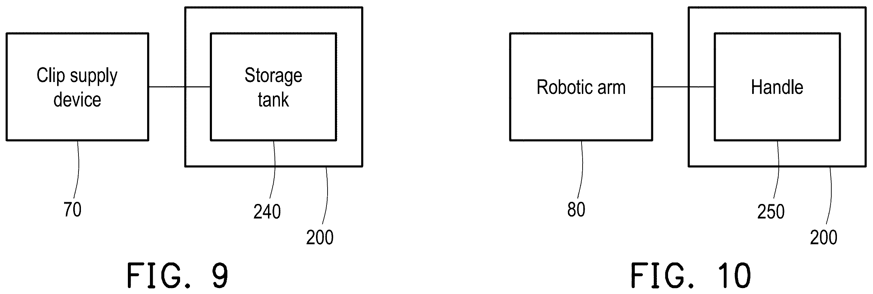

FIG. 9 is a schematic diagram of the storage tank of FIG. 6 connected to an external clip supply device. Referring to FIG. 9, the storage tank 240 of the clip device 200 may be connected to an external clip supply device 70. The clip supply device 70 is configured to receive a storage module 244 (shown in FIG. 6) depleted of the clips 220 from the storage tank body 242 (shown in FIG. 6), and the clip supply device 70 may provide another storage module 244 filled with clips 220 to the storage tank body 242. Accordingly, an operation of unmanned and continuous supply of the clips 220 may be achieved.

FIG. 10 is a schematic diagram of the handle of FIG. 6 connected to a robotic arm. Referring to FIG. 10, the handle 250 of the present embodiment may be connected to a robotic arm 80, and the robotic arm 80 is configured to activate the switch 230 (shown in FIG. 6) on the handle 250. Accordingly, an operation of unmanned and automatic activation of the switch 230 may be achieved.

Based on the above, the clip device of the invention uses the pusher to push the clip to move forward along the guide structure and uses the guide structure to stretch the clip open, so that the clip may pass over the flower stem and then clamp the support stick via the opening portion thereof. Moreover, when the clip clamps the support stick, the flower stem is received via the closed receiving area thereof at the same time. Accordingly, the flower stem is restricted to be adjacent to the support stick at the clip, so that the flower stem may grow in a preferred extension direction. Since the clip device of the invention may automatically make the clip clamp the support stick and receive the flower stem as described above simply by activating the switch, the clip device of the invention is more convenient and efficient than traditional manual operation.

## Claims

1. A clip device (100, 200), comprising:
a feeding mechanism (110, 210) comprising a pusher (112, 212) and a guide structure (114, 214), wherein the guide structure (114, 214) is adjacent to the pusher (112, 212);
a clip (120, 220) configured to be disposed at the guide structure (114, 214) and comprising a receiving portion (122) and two arm portions (124), wherein the two arm portions (124) are connected to the receiving portion (122) and an opening portion (124a) is formed between the two arm portions (124); and
a switch (130, 230) coupled to the pusher (112, 212) and configured to be activated to drive the pusher (112, 212) to push the clip (120, 220) forward along the guide structure (114, 214),
wherein when the clip (120, 220) moves forward along the guide structure (114, 214), the two arm portions (124) are stretched open via a guidance of the guide structure (114, 214) and a flower stem (50) is located in the opening portion (124a), then when the clip (120, 220) moves further forward and is released by the guide structure (114, 214), the two arm portions (124) pass over the flower stem (50) and clamp a support stick (60) in the opening portion (124a), so that the support stick (60) and the receiving portion (122) form a closed receiving area (R) receiving the flower stem (50), and a diameter of the closed receiving area (R) is greater than a diameter of the support stick (60).

2. The clip device (100, 200) of claim 1, wherein the guide structure (114, 214) has two guide grooves (1141), a distance (d1, d2) between the two guide grooves (1141) of a front end portion (114a, 214a) of the guide structure (114, 214) is greater than a distance (d1, d2) between the two guide grooves (1141) of other portions of the guide structure (114, 214), the clip (120, 220) further comprises two pin portions (126), the two pin portions (126) are respectively connected to the two arm portions (124) and configured to be extended into the two guide grooves (1141) respectively, and when the clip (120, 220) moves forward to the front end portion (114a, 214a) along the guide structure (114, 214), the two arm portions (124) are stretched open via a guidance of the two guide grooves (1141) on the two pin portions (126).

3. The clip device (100, 200) of claim 1, wherein each time the switch (130, 230) is activated, the switch (130, 230) drives the pusher (112, 212) to push the clip (120, 220) to move forward by a predetermined stroke, and a length of the predetermined stroke is equal to a length of the clip (120, 220).

4. The clip device (100, 200) of claim 1, comprising a plurality of the clip (120, 220), wherein the clips (120, 220) are configured to be disposed in sequence along the guide structure (114, 214), and the pusher (112, 212) is configured to push the clip (120, 220) farthest from a front end portion (114a, 214a) of the guide structure (114, 214) to drive the clips (120, 220) to move forward together.

5. The clip device (100, 200) of claim 1, further comprising a storage tank (240), wherein the storage tank (240) is connected to the feeding mechanism (110, 210) and configured to store a plurality of the clip (120, 220), and the storage tank (240) is configured to sequentially feed the clips (120, 220) into the feeding mechanism (110, 210).

6. The clip device (100, 200) of claim 5, wherein the storage tank (240) comprises a storage tank body (242) and a storage module (244), the storage module (244) is replaceably mounted at the storage tank body (242) and configured to store the clips (120, 220), and when the clips (120, 220) in the storage module (244) are depleted, the storage module (244) may be removed and another storage module (244) may be mounted at the storage tank body (242).

7. The clip device (100, 200) of claim 6, wherein the storage tank (240) is configured to be connected to an external clip supply device (70), the clip supply device (70) is configured to receive the storage module (244) from the storage tank body (242), and the clip supply device (70) is configured to provide the other storage module (244) to the storage tank body (242).

8. The clip device (100, 200) of claim 1, further comprising a handle (250), wherein the handle (250) is connected to the feeding mechanism (110, 210), and the switch (130, 230) is disposed at the handle (250).

9. The clip device (100, 200) of claim 8, wherein the handle (250) is configured to be connected to a robotic arm (80), and the robotic arm (80) is configured to activate the switch (130, 230).
